# EUROPEAN PATENT APPLICATION

(11) **EP 0 984 016 A1**
(43) Date of publication of application: **08.03.2000**
(21) Application number: 99906485.0
(22) Date of filing: 25.02.1999
(51) Int. Cl.: C07F 5/06, C08F 4/642, C08G 79/10

(54) **ALUMINUM COMPOUND AND PROCESS FOR PRODUCING THE SAME, CATALYST FOR OLEFIN POLYMER PRODUCTION, AND PROCESS FOR PRODUCING OLEFIN POLYMER**

(30) Priority: 27.02.1998 JP 4647698
(71) Applicant: IDEMITSU PETROCHEMICAL CO., LTD., Tokyo 108-0014 (JP)
(72) Inventor: FUJIKAWA, Shinjiro, Ichihara-shi, Chiba 299-0107 (JP); NAKASHIMA, Harumi, Ichihara-shi, Chiba 299-0107 (JP); IKEUCHI, Satoshi, Ichihara-shi, Chiba 299-0107 (JP); OKUDA, Fumio, Ichihara-shi, Chiba 299-0107 (JP); ABIKO, Toshiya, Tokyo 108-0041 (JP)
(74) Representative: Türk - Gille - Hrabal - Struck
(86) International application number: JP9900878
(87) International publication number: WO9943686

(57) **Abstract**

A catalyst for olefinic polymer production comprises (a) a penta-coordinated, organic aluminium oxide compound, (b) an alkylating agent and (c) a compound of a transition metal of Group IV, V, VI or VIII of the Periodic Table. Olefins are homopolymerized or copolymerized in the presence of the catalyst for olefinic polymer production to produce olefinic polymers. The process does not require a promoter of methylaluminoxane, with which the problem is low solubility and low storage stability. Using therein the penta-coordinated, organic aluminium oxide compound which is relatively inexpensive and can be produced easily, the process realizes high-yield production of olefinic polymers.

## Description

### TECHNICAL FIELD:

The present invention relates to a novel aluminium compound and a method for producing it, a catalyst for producing olefinic polymers, and a method for producing olefinic polymers. More precisely, the invention relates to a novel aluminium compound usable in catalysts for producing olefinic polymers, in place of aluminoxane. Aluminoxane is disadvantageous in that it is expensive and that, when it is used in polymerization of olefins, the quality of the polymers produced greatly vary. As opposed to this, where the aluminium compound of the invention is used in catalysts for polymerization of olefins, the catalysts exhibit high activity to stably produce the intended polyolefins, and the yield of the polyolefins is high. The invention also provides a method for producing the novel aluminium compound, as well as a catalyst comprising the aluminium compound for producing olefinic polymers, and a method for producing olefinic polymers in which is used the catalyst.

### BACKGROUND OF THE INVENTION:

Recently, techniques of using a high-activity, uniform system catalyst comprising aluminoxane as combined with a transition metal compound for producing α-olefinic polymers have been developed and have received much attention in the art (JP-A-58-43205, 58-19309, 62-230802, 63-142004, 63-234009, 64-51408, 64-6621, etc.).

However, in these techniques, a large amount of aluminoxane must be used since the catalytic activity per the aluminium atom of the compound is low, whereby the production costs are inevitably increased and a large amount of aluminium remains in the polymers produced. Thus, the techniques face such serious problems in their practical applications.

In order to solve these problems, various proposals have heretofore been made (JP-A-61-211307, 63-130601, 64-16803, 2-167307).

The activity per the aluminium atom of the compound could be increased in some degree by those proposals, which, however, are still problematic in that aluminoxane degrades the quality of the polymers produced and often unfavorably colors the polymers. This is because aluminoxane is difficult to dissolve and handle, and, in addition, aluminium remaining in the polymers produced is difficult to remove. For these reasons, further improvements in the techniques of using aluminoxane are desired.

Methods of combining methylaluminoxane with any other organic aluminium compounds have been proposed (JP-A-60-260602, 60-130604, 63-89506, 63-178108, 63-218707, 64-9206, 1-315407, 2-22306, 2-167310).

In these techniques, the amount of methylaluminoxane to be used could be reduced in some degree, but the activity per aluminium of the compound is still low. Therefore, further improvements in them are desired.

On the other hand, a novel trial of using a catalyst component for olefin polymerization has been proposed, which comprises two or more alkyl group-having aluminoxane compounds (JP-A-2-247201, 2-250886, 4-46906, 4-26410, 4-266910, US Patent 5,157,008). Using aluminoxane compounds as prepared by partly hydrogenating those aluminoxane compounds has also been proposed (JP-A-3-139503).

However, the aluminoxane compounds proposed are problematic in that their composition is not uniform and, in addition, they contain non-reacted starting compounds. This is because they are produced in a conventional method of reacting an organic aluminium with water or with the crystal water in organic salts. Moreover, in order to ensure high activity in polymer production, a large amount of the compounds must be used. Since the aluminoxane compounds are soluble only in aromatic solvents, there are many limitations on their use in polymer production.

Apart from the proposals noted above, using tetraalkylaluminoxane compounds has been proposed, which is intended to reduce the molecular weight of methylaluminoxane (JP-A-3-197514). The compounds have the advantage of good solubility even in aliphatic hydrocarbon solvents. However, though being active in ethylene polymerization, they are poorly active in polymerization of other α-olefins such as propylene, etc. Therefore, it is desired to further improve them in this matter.

Given that situation, the object of the invention is to provide a novel aluminium compound which is useful as a catalyst component for olefinic polymer production and which is advantageous in that its activity per the aluminium atom is high, that it has good solubility not only in aromatic hydrocarbon solvents but also in aliphatic hydrocarbon solvents and others and that its quality is not degraded in long-term, storage, to provide a high-activity catalyst for olefinic polymer production, and to provide an inexpensive, economical and efficient method for producing high-quality olefinic polymers in which is used the catalyst.

### DISCLOSURE OF THE INVENTION:

We, the present inventors have assiduously studied so as to attain the object noted above and, as a result, have found that an aluminium compound having a specific structure has good solubility not only in aromatic hydrocarbon solvents but also in aliphatic hydrocarbon solvents, that the quality of the compound is not degraded in long-term storage, that the compound can be produced by processing an organic aluminium oxide compound or a mixture of an organic aluminium oxide compound and an organic aluminium compound under reduced pressure and under heat, that a catalyst comprising the compound as combined with a compound of a transition metal compound of Group IV, V, VI or VIII of the Periodic Table has high activity, that the activity of the catalyst per the aluminium atom is high, that the catalyst is favorable for production of olefinic polymers, and that using the catalyst in olefin polymerization is advantageous as being economical and efficient to give high-quality olefinic polymers with good productivity. On the basis of these findings, we have completed the present invention.

Specifically, the invention is to provide an aluminium compound and a method for producing it, a catalyst for olefinic polymer production, and a method for producing olefinic polymers, which are mentioned below.
(1) An organic aluminium oxide compound with aluminium being in a penta-coordination state, wherein at least one atom of the ligands each bonding to aluminium via a coordination bond, which atom bonds to aluminium via a coordination bond, is an oxygen atom.
(2) The organic aluminium oxide compound of (1), of which the aluminium nuclear magnetic resonance spectrum (²⁷Al-NMR) gives a pattern of such that the proportion of the integrated value of the peaks appearing therein to fall within the range between 20 and 80 ppm is at least 80 % by area relative to the integrated value of all aluminium peaks therein.
(3) The organic aluminium oxide compound of (1) or (2), which is represented by a compositional formula of RAlO (where R indicates a hydrocarbon group).
(4) A method for producing an organic aluminium oxide compound of any one of (1) to (3), which comprises processing an organic aluminium compound or a mixture of an organic aluminium oxide compound and an organic aluminium compound under reduced pressure and under heat.
(5) The method for producing an organic aluminium oxide compound according to (4), wherein the ratio of the organic aluminium oxide compound to the organic aluminium compound falls between 1:0 and 1:2 in terms of the molar ratio for the aluminium atom in the two.
(6) A catalyst for producing olefinic polymers, which comprises (a) an organic aluminium oxide compound of any one of (1) to (3), and (c) a compound of a transition metal of Group IV, V, VI or VIII of the Periodic Table.
(7) A catalyst for producing olefinic polymers, which comprises (a) an organic aluminium oxide compound of any one of (1) to (3), (b) an alkylating agent, and (c) a compound of a transition metal of Group IV, V, VI or VIII of the Periodic Table.
(8) The catalyst for producing olefinic polymers of (6) or (7), wherein the component (c) is a transition metal compound of any of the following general formulae (I) to (IV):

   Q¹ₐ(C₅H_{5-a-b}R¹_{b})(C₅H_{5-a-c}R²_{c})M¹X¹Y¹ (I)

   Q²ₐ(C₅H_{5₋a₋d}R³_{d})Z¹M¹X¹Y¹ (II)

   M¹X¹₄ (III)

   L¹L²M²X¹Y¹ (IV)

   where Q¹ represents a bonding group that crosslinks the two conjugated, five-membered cyclic ligands (C₅H_{5-a-b}R¹_{b}) and (C₅H_{5₋a₋c}R²_{c}); Q² represents a bonding group that crosslinks the conjugated, five-membered cyclic ligand (C₅H_{5₋a₋d}R³_{d}) and the group Z¹; R¹, R² and R³ each independently represent a hydrocarbon group, a halogen atom, an alkoxy group, a silicon-containing hydrocarbon group, a phosphorus-containing hydrocarbon group, a nitrogen-containing hydrocarbon groups, or a boron-containing hydrocarbon group, and a plurality of these, if any, may be the same or different; a represents 0, 1 or 2; b, c and d each represent an integer of from 0 to 5 when a = 0, or an integer of from 0 to 4 when a = 1, or an integer of from 0 to 3 when a = 2; M' represents a transition metal of Group IV, V or VI of the Periodic Table; M² represents a transition metal of Group VIII of the Periodic Table; L¹ and L² each represent a coordinating ligand; X¹, Y¹ and Z¹ each represent a covalent-bonding ligand; L¹, L², X¹ and Y¹ may bond to each other to form a cyclic structure.
(9) A method for producing olefinic polymers, which comprises homopolymerizing olefins or copolymerizing olefins with other olefins and/or other polymerizing unsaturated compounds in the presence of a catalyst for olefinic polymer production of any one of (6) to (8).

### BRIEF DESCRIPTION OF THE DRAWINGS:

Fig. 1 is a chart of ²⁷Al-NMR of the organic aluminium oxide compound as obtained in Example 1.
Fig. 2 is a chart of ¹H-NMR of the organic aluminium oxide compound as obtained in Example 1.

### BEST MODES FOR CARRYING OUT THE INVENTION:

The organic aluminium oxide compound of the invention has aluminium therein in a penta-coordination state, wherein at least one atom of the ligands each bonding to aluminium via a coordination bond, which atom bonds to aluminium via a coordination bond, is an oxygen atom. We have found various types of penta-coordinating, organic aluminium oxide compounds of the invention, of which are preferred those to be represented by a compositional formula of RAlO (where R indicates a hydrocarbon group). For example, the compounds may have various configurations of [i] planar structures, [ii] two-layered structures, [iii] sleeve-like structures or the like, such as those to be represented by the following general formulae (V) to (VIII):

### [i] Planar structures:

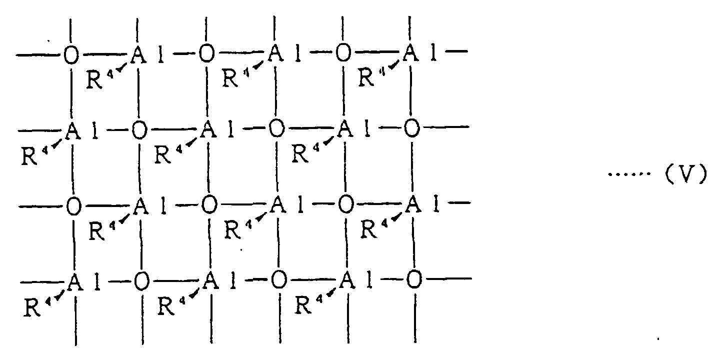

### [ii] Two-layered structures:

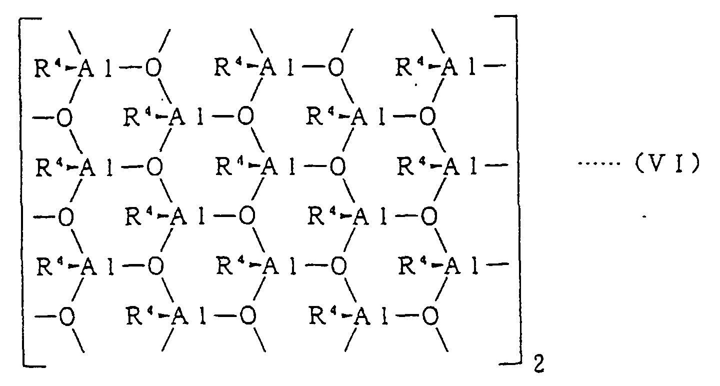

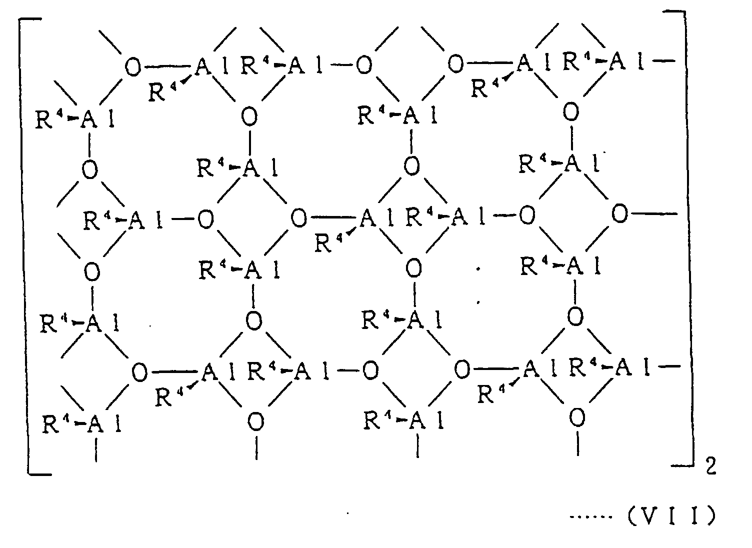

### [iii] Sleeve-like structures:

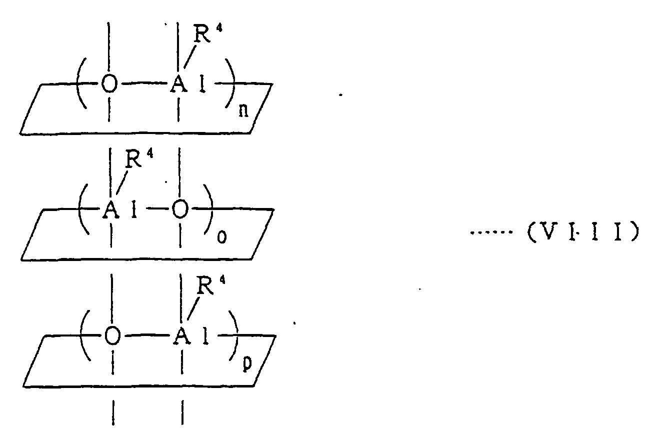

In those formulae, R⁴ represents a hydrogen atom, a halogen atom, a siloxy group, an alkoxy group, an aryloxy group, or a hydrocarbon group having from 1 to 10 carbon atoms, and plural R⁴'s may be the same or different.

Specific examples of R⁴ include a hydride group, a fluoro group, a chloro group, a bromo group, an iodo group, a trimethylsiloxy group, a chlorodimethylsiloxy group, a dichloromethylsiloxy group, a trichlorosiloxy group, a triphenylsiloxy group, a diphenylmethylsiloxy group, a phenyldimethylsiloxy group, a methoxy group, an ethoxy group, an n-propoxy group, an i-propoxy group, a phenoxy group, a p-methylphenoxy group, a methyl group, an ethyl group, an n-propyl group, an i-propyl group, an n-butyl group, an i-butyl group, a t-butyl group, etc. of those, preferred are a hydride group, a methyl group, an ethyl group, an n-propyl group, an i-propyl group, an n-butyl group, an i-butyl group, and a t-butyl group. Especially preferred are a methyl group and an i-butyl group in view of the polymerization activity of the compounds.

In the compounds having the two-layered structure [ii], the two layers are so configured that each aluminium atom faces each oxygen atom, and all aluminium atoms are thereby in a penta-coordination state. In those having the sleeve-like structure [iii], the following units 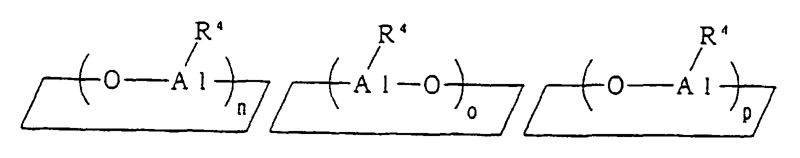 indicate cyclic skeletons, in which n, o and p each represent an integer of at least 2. In those, each aluminium atom bonds to the group R⁴, while being crosslinked by oxygen atoms to have a bonding manner of Al-O-Al, and is in a penta-coordination state.

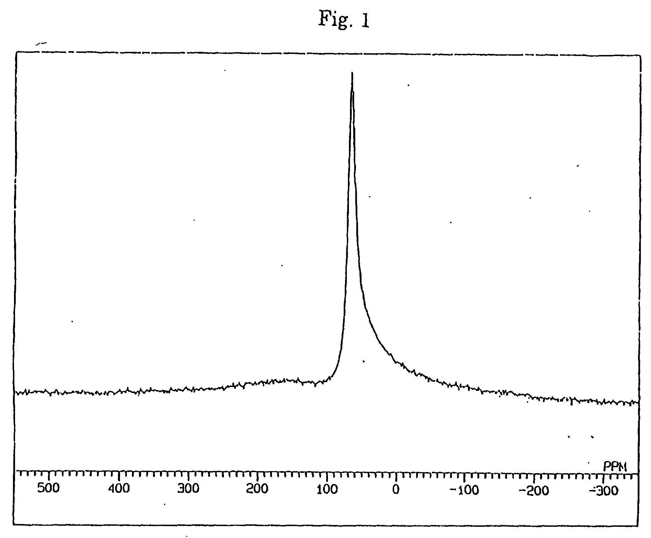

In the compounds, the coordination number of aluminium could be seen through ²⁷Al-NMR spectrometry. The peaks appearing in the spectrum are assigned according to the proposal by Reinhard Benn et al. in "Journal of Organometallic Chemistry, 333, 155 (1987)". Specifically, the peaks for the penta-coordinating aluminium, in the organic aluminium oxide compounds appear within the range between 20 and 80 ppm. Fig. 1 shows the chart of ²⁷Al-NMR of the compound as obtained in Example 1, in which is seen no peak for aluminium having a coordination number of smaller than 5. From this, it is understood that the proportion of the terminal structure in the compounds is extremely low. It is desirable that the ²⁷Al-NMR pattern of the aluminium compound of the invention gives a pattern of such that the proportion of the integrated value of the peaks appearing therein to fall within the range between 20 and 80 ppm is at least 80 % by area relative to the integrated value of all aluminium peaks therein. If the proportion is smaller than 80 % by area, the activity of the compounds will be low.

The penta-coordinating, organic aluminium oxide compound can be prepared by mixing an organic aluminium oxide compound (for example, R⁵R⁶AlOAlR⁷R⁸) and an organic aluminium compound (for example, R⁹R¹⁰R¹¹Al) in any desired molar ratio, followed by processing the resulting mixture under reduced pressure and under heat. (In those formulae, R⁵, R⁶, R⁷, R⁸, R⁹, R¹⁰ and R¹¹ each independently represent a hydrogen atom, a halogen atom, a siloxy group, an alkoxy group, an aryloxy group, or a hydrocarbon group having from 1 to 10 carbon atoms, and these may be the same or different.)

The ratio of the organic aluminium oxide compound to the organic aluminium compound may fall generally between 1:0 and 1:1 in terms of the molar ratio for the aluminium atom in the two, but preferably between 1:0.5 and 1:1 in view of the production yield.

Regarding the processing condition, the heating temperature preferably falls between 20 and 100°C, more preferably between 50 and 100°C. The reduced pressure is preferably at most 1.0 x 10⁻³ mmHg. Within the defined range, the production yield will be high.

Solvents may be used for the processing. As the solvents, usable are inert organic solvents or their mixtures. Concretely, the solvents include aliphatic hydrocarbons such as pentane, isopentane, hexane, cyclohexane, heptane, octane, decane, dodecane, hexadecane, octadecane, etc. (aliphatic hydrocarbons having from 5 to 10 carbon atoms are preferred); and aromatic hydrocarbons such as benzene, chlorobenzene, toluene, xylene, cumene, etc. (aromatic hydrocarbons having from 6 to 20 carbon atoms are preferred).

The catalyst for olefinic polymer production of the invention comprises (a) the organic aluminium oxide compound mentioned above, (c) a compound of a transition metal of Group IV, V, VI or VIII of the Periodic Table, and optionally (b) an alkylating agent.

The optional component (b) to be in the catalyst of the invention includes various types of alkylating agents. Preferred are those of the following general formula (IX):

R¹²R¹³R¹⁴Al (IX)

wherein R¹², R¹³ and R¹⁴ each independently represent a hydrogen atom, a halogen atom, a siloxy group, an alkoxy group, an aryloxy group, or a hydrocarbon group having from 1 to 10 carbon atoms, and these may be the same or different.

Concretely, the compounds include trialkylaluminiums such as trimethylaluminium, triethylaluminium, triisobutylaluminium, tri-t-butylaluminium, trihexylaluminium, trioctylaluminium, tridodecylaluminium, etc.; alkylaluminium halides such as diethylaluminium chloride, diisobutylaluminium chloride, ethylaluminium sesquichloride, ethylaluminium dichloride, etc.; alkylaluminium hydrides such as dimethylaluminium hydride, diethylaluminium hydride, diisobutylaluminium hydride, etc.; alkylaluminium alkoxides such as diethylaluminium ethoxide, dimethylaluminium trimethylsiloxide, diethylaluminium phenoxide, methylaluminium di(4-methyl-2,6-di-t-butyl)phenoxide, isobutylaluminium di(4-methyl-2,6-di-t-butyl)phenoxide, etc. Of those, especially preferred are trimethylaluminium, triisobutylaluminium and tri-t-butylaluminium.

The component (c) of being a compound of a transition metal of Group IV, V, VI or VIII of the Periodic Table to be in the catalyst of the invention is not specifically defined. However, in view of the polymerization activity of the catalyst, preferred are compounds of a transition metal of Group IV, V or VI of the Periodic Table of the following general formulae (I) to (III). Also preferred are compounds of a transition metal of Group VIII of the Periodic Table of the following general formula (IV).

Q¹ₐ(C₅H_{5₋a-b}R¹_{b})(C₅H_{5-a-c}R²_{c})M¹X¹Y¹ (I)

Q²ₐ(C₅H_{5₋a₋d}R³_{d})Z¹M¹X¹Y¹ (II)

M¹X¹₄ (III)

L¹L²M²X¹Y¹ (IV)

wherein Q¹ represents a bonding group that crosslinks the two conjugated, five-membered cyclic ligands (C₅H_{5₋a₋b}R¹_{b}) and (C₅H_{5₋a₋c}R²_{c}); Q² represents a bonding group that crosslinks the conjugated, five-membered cyclic ligand (C₅H_{5₋a₋d}R³_{d}) and the group Z¹; R¹, R² and R³ each independently represent a hydrocarbon group, a halogen atom, an alkoxy group, a silicon-containing hydrocarbon group, a phosphorus-containing hydrocarbon group, a nitrogen-containing hydrocarbon groups, or a boron-containing hydrocarbon group, and a plurality of these, if any, may be the same or different; a represents 0, 1 or 2; b, c and d each represent an integer of from 0 to 5 when a = 0, or an integer of from 0 to 4 when a = 1, or an integer of from 0 to 3 when a = 2; M¹ represents a transition metal of Group IV, V or VI of the Periodic Table; M² represents a transition metal of Group VIII of the Periodic Table; L¹ and L² each represent a coordinating ligand; X¹, Y¹ and Z¹ each represent a covalent-bonding ligand; L¹, L², X¹ and Y¹ may bond to each other to form a cyclic structure.

Specific examples of Q¹ and Q² include (1) an alkylene group having from 1 to 4 carbon atoms, a cycloalkylene group, or their groups substituted by a lower alkyl or phenyl group at the side chain, such as a methylene group, an ethylene group, an isopropylene group, a methylphenylmethylene group, a diphenylmethylene group, a cyclohexylene group, etc.; (2) a silylene group, an oligosilylene group, or their groups substituted by a lower alkyl or phenyl group at the side chain, such as a silylene group, a dimethylsilylene group, a methylphenylene group, a diphenylsilylene group, a disilylene group, a tetramethyldisilylene group, etc.; (3) a germanium, phosphorus, nitrogen, boron or aluminium-containing hydrocarbon group (in which the hydrocarbon group includes, for example, an alkyl group having from 1 to 4 carbon atoms, a phenyl group, a hydrocarbyloxy group (preferably, an alkoxy group having from 1 to 4 carbon atoms), etc.), concretely, groups of (CH₃)₂Ge, (C₆H₅)₂Ge, (CH₃)P, (C₆H₅)P, (C₄H₉)N, (C₆H₅)N, (CH₃)B, (C₄H₉)B, (C₆H₅)B, (C₆H₅)Al, (CH₃O)Al, etc.. Of those, preferred are an alkylene group and a silylene group.

(C₅H_{5₋a₋b}R¹_{b}), (C₅H_{5₋a₋c}R²_{c}) and (C₅H_{5₋a₋d}R³_{d}) are conjugated, five-membered cyclic ligands, in which R¹, R² and R³ each independently represent a hydrocarbon group, a halogen atom, an alkoxy group, a silicon-containing hydrocarbon group, a phosphorus-containing hydrocarbon group, a nitrogen-containing hydrocarbon groups, or a boron-containing hydrocarbon group, and a plurality of these, if any, may be the same or different. a represents 0, 1 or 2. b, c and d each represent an integer of from 0 to 5 when a = 0, or an integer of from 0 to 4 when a = 1, or an integer of from 0 to 3 when a = 2. The hydrocarbon group preferably has from 1 to 20 carbon atoms, more preferably from 1 to 12 carbon atoms. The hydrocarbon group may be a monovalent group that bonds to the cyclopentadienyl group of the conjugated, five-membered cyclic group. Two of plural hydrocarbon groups, if any, may bond to each other to form a cyclic structure. Concretely, the cyclic structure includes substituted or unsubstituted cyclopentadienyl, indenyl and fluorenyl groups. The halogen atom includes chlorine, bromine, iodine and fluorine atoms. The alkoxy group preferably has from 1 to 12 carbon atoms. The silicon-containing hydrocarbon group includes, for example, -SiR¹⁵R¹⁶R¹⁷ (where R¹⁵, R¹⁶ and R¹⁷ each represent a hydrocarbon group having from 1 to 24 carbon atoms), etc. The phosphorus-containing hydrocarbon group, nitrogen-containing hydrocarbon group and boron-containing hydrocarbon groups include -PR¹⁸R¹⁹, -NR¹⁸R¹⁹ and -B R¹⁸R¹⁹ (where R¹⁸ and R¹⁹ each represent a hydrocarbon group having from 1 to 18 carbon atoms), respectively, etc. Plural groups R¹'s, R²'s and R³'s, if any, may be the same or different. In formula (I), the five-membered cyclic ligands (C₅H_{5₋a₋b}R¹_{b}) and (C₅H_{5₋a₋c}R²_{c}) may be the same or different.

M¹ represents a transition metal of Group IV to VI of the Periodic Table, including, for example, titanium, zirconium, hafnium, niobium, molybdenum, tungsten, etc. Of those, preferred are titanium, zirconium and hafnium. Especially preferred is zirconium. Z¹ represents a covalent-bonding ligand, concretely indicating oxygen (-O-), sulfur (-S-), an alkoxy group having from 1 to 20, preferably from 1 to 10 carbon atoms, a thioalkoxy group having from 1 to 20, preferably from 1 to 12 carbon atoms, a nitrogen-containing hydrocarbon group having from 1 to 40, preferably from 1 to 18 carbon atoms, or a phosphorus-containing hydrocarbon group having from 1 to 40, preferably from 1 to 18 carbon atoms. X¹ and Y¹ each represent a covalent-bonding ligand, concretely indicating a hydrogen atom, a halogen atom, a hydrocarbon group having from 1 to 20, preferably from 1 to 10 carbon atoms, an alkoxy group having from 1 to 20, preferably from 1 to 10 carbon atoms, an amino group, a phosphorus-containing hydrocarbon group having from 1 to 20, preferably from 1 to 12 carbon atoms (e.g., a diphenylphosphine group, etc.), a silicon-containing hydrocarbon group having from 1 to 20, preferably from 1 to 12 carbon atoms (e.g., a trimethylsilyl group, etc.), or a residue of a C₁₋₂₀, preferably C₁₋₁₂ hydrocarbon or a halogen-containing boron compound (e.g., BF₄, B(C₆F₅)₄). Of those, preferred are a halogen atom and a hydrocarbon group. X¹ and Y¹ may be the same or different.

In formula (III), M¹ represents a transition metal of Group IV to VI of the Periodic Table, like the above. X¹ represents a covalent-bonding ligand, concretely indicating a halogen atom, an alkoxy group, etc.

Specific examples of the transition metal compounds of formulae (I) and (II) are mentioned below.
[i] Transition metal compounds having two conjugated five-membered cyclic ligands but not having a crosslinking group, such as bis(cyclopentadienyl)titanium dichloride, bis(methylcyclopentadienyl)titanium dichloride, bis(dimethylcyclopentadienyl)titanium dichloride, bis(trimethylcyclopentadienyl)titanium dichloride, bis(tetramethylcyclopentadienyl)titanium dichloride, bis(pentamethylcyclopentadienyl)titanium dichloride, bis(n-butylcyclopentadienyl)titanium dichloride, bis(indenyl)titanium dichloride, bis(fluorenyl)titanium dichloride, bis(cyclopentadienyl)titanium chlorohydride, bis(cyclopentadienyl)methyltitanium chloride, bis(cyclopentadienyl)ethyltitanium chloride, bis(cyclopentadienyl)phenyltitanium chloride, bis(cyclopentadienyl)dimethyltitanium, bis(cyclopentadienyl)diphenyltitanium, bis(cyclopentadienyl)dineopentyltitanium, bis(cyclopentadienyl)dihydrotitanium, (cyclopentadienyl)(indenyl)titanium dichloride, (cyclopentadienyl)(fluorenyl)titanium dichloride, etc.
[ii] Transition metal compounds having two conjugated five-membered cyclic ligands as crosslinked with an alkylene group, such as methylenebis(indenyl)titanium dichloride, ethylenebis(indenyl)titanium dichloride, methylenebis(indenyl)titanium chlorohydride, ethylenebis(indenyl)methyltitanium chloride, ethylenebis(indenyl)methoxychlorotitanium, ethylenebis(indenyl)titanium diethoxide, ethylenebis(indenyl)dimethyltitanium, ethylenebis(4,5,6,7-tetrahydroindenyl)titanium dichloride, ethylenebis(2-methylindenyl)titanium dichloride, ethylenebis(2,4-dimethylindenyl)titanium dichloride, ethylenebis(2-methyl-4-trimethylsilylindenyl)titanium dichloride, ethylenebis(2,4-dimethyl-5,6,7-trihydroindenyl)titanium dichloride, ethylene(2,4-dimethylcyclopentadienyl)(3',5'-dimethylcyclopentadienyl)titanium dichloride, ethylene(2-methyl-4-t-butylcyclopentadienyl)(3'-t-butyl-5'-methylcyclopentadienyl)titanium dichloride, ethylene(2,3,5-trimethylcyclopentadienyl)(2',4',5'-trimethylcyclopentadienyl)titanium dichloride, isopropylidenebis(2-methylindenyl)titanium dichloride, isopropylidenebis(indenyl)titanium dichloride, isopropylidenebis(2,4-dimethylindenyl)titanium dichloride, isopropylidene(2,4-dimethylcyclopentadienyl)(3',5'-dimethylcyclopentadienyl)titanium dichloride, isopropylidene(2-methyl-4-t-butylcyclopentadienyl)(3'-t-butyl-5'-methylcyclopentadienyl)titanium dichloride, methylene(cyclopentadienyl)(3,4-dimethylcyclopentadienyl)titanium dichloride, methylene(cyclopentadienyl)(3,4-dimethylcyclopentadienyl)titanium chlorohydride, methylene(cyclopentadienyl)(3,4-dimethylcyclopentadienyl)dimethyltitanium, methylene(cyclopentadienyl)(3,4-dimethylcyclopentadienyl)diphenyltitanium, methylene(cyclopentadienyl)(trimethylcyclopentadienyl)titanium dichloride, methylene(cyclopentadienyl)(tetramethylcyclopentadienyl)titanium dichloride, isopropylidene(cyclopentadienyl)(3,4-dimethylcyclopentadienyl)titanium dichloride, isopropylidene(cyclopentadienyl)(2,3,4,5-tetramethylcyclopentadienyl)titanium dichloride, isopropylidene (cyclopentadienyl)(3-methylindenyl)titanium dichloride, isopropylidene(cyclopentadienyl)(fluorenyl)titanium dichloride, isopropylidene(2-methylcyclopentadienyl)(fluorenyl)titanium dichloride, isopropylidene (2,5-dimethylcyclopentadienyl)(3,4-dimethylcyclopentadienyl)titanium dichloride, (2,5-dimethylcyclopentadienyl)(fluorenyl)titanium dichloride, ethylene(cyclopentadienyl)(3,5-cyclopentadienyl)titanium dichloride, ethylene(cyclopentadienyl)(fluorenyl)titanium dichloride, ethylene(2,5-dimethylcyclopentadienyl)(fluorenyl)titanium dichloride, ethylene(2,5-diethylcyclopentadienyl)(fluorenyl)titanium dichloride, diphenylmethylene(cyclopentadienyl)(3,4-diethylcyclopentadienyl)titanium dichloride, diphenylmethylene(cyclopentadienyl)(3,4-diethylcyclopentadienyl)titanium dichloride, cyclohexylidene(cyclopentadienyl)(fluorenyl)titanium dichloride, cyclohexylidene(2,5-dimethylcyclopentadienyl)(3',4'-dimethylcyclopentadienyl)titanium dichloride, etc.
[iii] Transition metal compounds having two, silylene-crosslinked, conjugated, five-membered cyclic ligands, such as dimethylsilylenebis(indenyl)titanium dichloride, dimethylsilylenebis(4,5,6,7-tetrahydroindenyl)titanium dichloride, dimethylsilylenebis(2-methylindenyl)titanium dichloride, dimethylsilylenebis(2,4-dimethylindenyl)titaniumdichloride, dimethylsilylenebis(2-methyl-4-phenylindenyl)titanium dichloride, dimethylsilylenebis(2-methyl-4,5-benzoindenyl)titanium dichloride, dimethylsilylenebis(2,4-dimethylindenyl)(3',5'-dimethylcyclopentadienyl)titanium dichloride, phenylmethylsilylenebis(indenyl)titanium dichloride, phenylmethylsilylenebis(4,5,6,7-tetrahydroindenyl)titanium dichloride, phenylmethylsilylenebis(2,4-dimethylindenyl)titanium dichloride, phenylmethylsilylene(2,4-dimethylcyclopentadienyl)(3',5'-dimethylcyclopentadienyl)titanium dichloride, phenylmethylsilylene(2,3,5-trimethylcyclopentadienyl)(2',4',5'-trimethylcyclopentadienyl)titanium dichloride, phenylmethylsilylenebis(tetramethylcyclopentadienyl) titanium dichloride, diphenylsilylenebis(2,4-dimethylindenyl)titanium dichloride, diphenylsilylenebis(indenyl)titanium dichloride, diphenylsilylenebis(2-methylindenyl)titanium dichloride, tetramethyldisilylenebis(indenyl)titanium dichloride, tetramethyldisilylenebis(cyclopentadienyl)titanium dichloride, tetramethyldisilylene(3-methylcyclopentadienyl)(indenyl)titanium dichloride, dimethylsilylene(cyclopentadienyl)(3,4-dimethylcyclopentadienyl)titanium dichloride, dimethylsilylene(cyclopentadienyl)(trimethylcyclopentadienyl)titanium dichloride, dimethylsilylene(cyclopentadienyl)(tetramethylcyclopentadienyl)titanium dichloride, dimethylsilylene(cyclopentadienyl)(3,4-diethylcyclopentadienyl)titanium dichloride, dimethylsilylene(cyclopentadienyl)(triethylcyclopentadienyl)titanium dichloride, dimethylsilylene(cyclopentadienyl)(tetraethylcyclopentadienyl)titanium dichloride, dimethylsilylene(cyclopentadienyl)(fluorenyl)titanium dichloride, dimethylsilylene(cyclopentadienyl)(2,7-di-t-butylfluorenyl)titanium dichloride, dimethylsilylene(cyclopentadienyl)(octahydrofluorenyl)titanium dichloride, dimethylsilylene(2-methylcyclopentadienyl)(fluorenyl)titanium dichloride, dimethylsilylene(2,5-dimethylcyclopentadienyl)(fluorenyl)titanium dichloride, dimethylsilylene(2-ethylcyclopentadienyl)(fluorenyl)titanium dichloride, dimethylsilylene(2,5-diethylcyclopentadienyl)(fluorenyl)titanium dichloride, diethylsilylene(2-methylcyclopentadienyl)(2',7'-di-t-butylifluorenyl)titanium dichloride, dimethylsilylene(2,5-dimethylcyclopentadienyl) (2',7'-di-t-butylfluorenyl)titanium dichloride, dimethylsilylene(2-ethylcyclopentadienyl)(2',7'-di-t-butylfluorenyl)titanium dichloride,dimethylsilylene(diethylcyclopentadienyl)(2,7-di-t-butylfluorenyl)titanium dichloride, dimethylsilylene-(methylcyclopentadienyl)(octahydrofluorenyl)titanium dichloride, dimethylsilylene(dimethylcyclopentadienyl)(octahydrofluorenyl)titanium dichloride, dimethylsilylene(ethylcyclopentadienyl)(octahydrofluorenyl)titanium dichloride, dimethylsilylene(diethylcyclopentadienyl)(octahydrofluorenyl)titanium dichloride, etc.
[iv] Transition metal compounds having two conjugated five-membered cyclic ligands as crosslinked with a germanium, aluminium, boron, phosphorus or nitrogen-containing hydrocarbon group, such as dimethylgermylenebis(indenyl)titanium dichloride, dimethylgermylene(cyclopentadienyl)(fluorenyl)titanium dichloride, methylalumylenebis(indenyl)titanium dichloride, phenylamylenebis(indenyl)titanium dichloride, phenylphosphylenebis(indenyl)titanium dichloride, ethylborenebis(indenyl)titanium dichloride, phenylamylenebis(indenyl)titanium dichloride, phenylamylene(cyclopentadienyl)(fluorenyl)titanium dichloride, etc.
[v] Transition metal compounds having one conjugated five-membered cyclic ligand, such as pentamethylcyclopentadienyl-bis(phenyl)aminotitanium dichloride, indenyl-bis(phenyl)aminotitanium dichloride, pentamethylcyclopentadienyl-bis(trimethylsilyl)aminotitanium dichloride, pentamethylcyclopentadienylphenoxytitanium dichloride, dimethylsilylene(tetramethylcyclopentadienyl)phenylaminotitanium dichloride, dimethylsilylene(tetramethylcyclopentadienyl)-t-butylaminotitanium dichloride, dimethylsilylene(tetrahydroindenyl)decylaminotitanium dichloride, dimethylsilylene(tetrahydroindenyl)[bis(trimethylsilyl)amino]titanium dichloride, dimethylgermylene(tetramethylpentadienyl) phenylaminotitanium dichloride, pentamethylcyclopentadienyltitanium trichloride, etc.
[vi] Transition metal compounds having two conjugated five-membered cyclic ligands with the ligands being double-crosslinked, such as (1,1'-dimethylsilylene)(2,2'-isopropylidene)-bis(cyclopentadienyl)titanium dichloride, (1,1'-dimethylsilylene)(2,2'-dimethylsilylene)-bis(cyclopentadienyl)titanium dichloride, (1,1'-dimethylsilylene)(2,2'-isopropylidene)-bis(cyclopentadienyl)dimethyltitanium, (1,1'-dimethylsilylene)(2,2'-isopropylidene)-bis(cyclopentadienyl)dibenzyltitanium, (1,1'-dimethylsilylene) (2,2'-isopropylidene)-bis(cyclopentadienyl)bis(trimethylsilyl)titanium, (1,1'-dimethylsilylene)(2,2'-isopropylidene)-bis(cyclopentadienyl)bis(trimethylsilylmethyl)titanium, (1,2'-dimethylsilylene)(2,1'-ethylene)-bis(indenyl)titanium dichloride, (1,1'-dimethylsilylene)(2,2'-ethylene)-bis(indenyl)titanium dichloride, (1,1'-ethylene)(2,2'-dimethylsilylene)-bis(indenyl)titanium dichloride, (1,1'-dimethylsilylene)(2,2'-cyclohexylidene)-bis(indenyl)titanium dichloride, etc.
[vii] In addition to the above, further mentioned are derivatives of the compounds of [i] to [vi], as prepared by substituting the chlorine atom in those compounds with any of bromine and iodine atoms, methyl and phenyl groups, etc.; as well as derivatives of those transition metal compounds as prepared by substituting the center metal of titanium in those compounds with any of zirconium, hafnium, niobium, tungsten, etc.
[viii] Of the compounds of [i] to [vii], the transition metal compounds [v] having one conjugated five-membered cyclic ligand are especially preferably used in producing styrenic polymers having a syndiotactic structure.

As specific examples of the transition metal compounds of formula (III), mentioned are tetra-n-butoxytitanium, tetra-i-propoxytitanium, tetraphenoxytitanium, tetracresoxytitanium, tetrachlorotitanium, tetrabromotitanium, tetra-n-butoxyzirconium, tetra-i-propoxyzirconium, tetraphenoxyzirconium, tetracresoxyzirconium, tetrachlorozirconium, tetrabromozirconium, etc.

Of those transition metal compounds, preferred are titanium compounds, zirconium compounds and hafnium compounds.

In the transition metal compounds of formula (IV), M² represents a transition metal of Group VIII of the Periodic Table, concretely indicating iron, cobalt, nickel, palladium, platinum, etc. Of those, preferred are nickel and palladium. L¹ and L² each represent a coordinating ligand; and X¹ and Y¹ each represent a covalent-bonding or ionic-bonding ligand. As mentioned hereinabove, X¹ and Y¹ each concretely indicate a hydrogen atom, a halogen atom, a hydrocarbon group having from 1 to 20, preferably from 1 to 10 carbon atoms, an alkoxy group having from 1 to 20, preferably from 1 to 10 carbon atoms, an amino group, a phosphorus-containing hydrocarbon group having from 1 to 20, preferably from 1 to 12 carbon atoms (e.g., a diphenylphosphine group, etc.), a silicon-containing hydrocarbon group having from 1 to 20, preferably from 1 to 12 carbon atoms, or a residue of a halogen-containing boron compound (e.g., B(C₆F₅)₄, BF₄). Of those, preferred are a halogen atom and a hydrocarbon group. X¹ and Y¹ may be the same or different. Specific examples of L¹ and L² include residues of triphenylphosphine, acetonitrile, benzonitrile, 1,2-bisdiphenylphosphinopropane, 1,1'-bisdiphenylphosphinoferrocene, cyclooctadiene, pyridine, bistrimethylsilylaminobistrimethylsilyliminophosphorane, etc. Those L¹, L², X¹ and Y¹ may bond to each other to form a cyclic structure.

Specific examples of the transition metal compounds of formula (IV) include dibromobistriphenylphosphine-nickel, dichlorobistriphenylphosphine-nickel, dibromoacetonitrile-nickel, dibromodibenzonitrile-nickel, dibromo(1,2-bisdiphenylphosphinoethane)nickel, dibromo(1,3-bisdiphenylphosphinopropane)nickel, dibromo(1,1'-diphenylbisphosphinoferrocene)nickel, dimethylbisdiphenylphosphine-nickel, dimethyl(1,2-bisdiphenylphosphinoethane)nickel, methyl(1,2-bisdiphenylphosphinoethane)nickel tetrafluoroborate, (2-diphenylphosphino-1-phenylethyleneoxy)phenylpyridine-nickel, dichlorobistriphenylphosphine-palladium, dichlorodibenzonitrile-palladium, dichlorodiacetonitrile-palladium, dichloro(1,2-bisdiphenylphosphinoethane)palladium, bistriphenyiphosphine-palladium bistetrafluoroborate, bis(2,2'-bipyridine)methyliron tetrafluoroborate etherate, etc. Of those, preferred are cationic complexes such as methyl(1,2-bisdiphenylphosphinoethane)nickel tetrafluoroborate, bistriphenylphosphine-palladium bistetrafluoroborate, bis(2,2'-bipyridine)methyliron tetrafluoroborate etherate.

In the catalyst of the invention, one or more of the transition metal compounds may be used as the component (c).

The catalyst for olefinic polymer production of the invention comprises the components (a) and (c) and optionally the component (b), as so mentioned hereinabove. To prepare the catalyst, the predetermined components are kept in contact with each other in or outside the polymerization system where it is used, in the presence or absence of the monomers to be polymerized. The proportion of each component is not specifically defined. However, it is desirable that the molar ratio of the component (a) to the component (c) falls between 1:1 and 1:1000000, more preferably between 1:10 and 1:10000. If the ratio oversteps the defined range, the catalyst cost per the unit weight of the polymer to be produced will increase, and is impracticable. Where the catalyst contains the component (b), the molar ratio of the component (b) to the component (c) preferably falls between 1:1 and 1:10000, more preferably between 1:5 and 1:2000, even more preferably between 1:10 and 1:1000. Adding the component (b) to the catalyst increases the polymerization activity of the catalyst per the transition metal existing in the catalyst. However, if the amount of the component (b) added is too much, especially when it oversteps the range defined as above, the excess amount thereof will be useless and, in addition, the component (b) will remain much in the polymer produced. If, on the other hand, the amount of the component added is too small, the catalyst could not exhibit satisfactory catalytic activity and will be often unfavorable. The method for contacting the components with each other is not specifically defined. The components could be separately added to the polymerization system (for example, in a polymerization reactor) in any desired order to thereby make them contacted with each other, or alternatively, any desired components may be previously contacted with each other and led into a polymerization reactor, in which they may be further contacted with the other component. While or after the components are contacted with each other, a polymer such as polyethylene, polypropylene or the like, or a carrier of an inorganic oxide such as silica, alumina or the like may be present along with them or may be contacted with them.

The catalyst of the invention may further contain, in addition to the components mentioned above, any optional additives not interfering with the capabilities of the catalyst.

In the method for producing olefinic polymers of the invention, olefins are homopolymerized by themselves or are copolymerized with other olefins and/or other polymerizing unsaturated compounds into olefinic polymers. The olefins may be, for example, α-olefins having from 2 to 20 carbon atoms, concretely, ethylene, propylene, 1-butene, 4-methyl-1-pentene, 1-hexene, 1-octene, 1-decene, 1-dodecene, 1-tetradecene, 1-hexadecene, 1-octadecene, 1-eicosene, styrene, p-methylstyrene, p-ethylstyrene, p-isopropylstyrene, p-vinylstyrene, etc. Of those, preferred are α-olefins having from 2 to 10 carbon atoms, concretely, ethylene, propylene, 1-butene, 4-methyl-1-pentene, styrene, etc. One or more of thbse olefins maybe employed either singly or as combined. For copolymerization of two or more olefins, those mentioned above may be combined in any desired manner.

In the method of the invention, olefins such as those mentioned above may be copolymerized with other polymerizing unsaturated compounds. The polymerizing unsaturated compounds usable herein include, for example, conjugated or non-conjugated dienes such as butadiene, 1,4-hexadiene, 1,8-nonadiene, 7-methyl-1,6-octadiene, 1,9-decadiene, etc., cyclic olefins such as cyclopropene, cyclobutene, cyclopentene, norbornene, dicyclopentadiene, etc.; aromatic olefins such as styrene, p-methylstyrene, p-ethylstyrene, p-isopropylstyrene, p-vinylstyrene, etc. One or more of these polymerizing unsaturated compounds may be used either singly or as combined. Regarding the polymerization mode for the method of producing olefinic polymers of the invention, employable is any of solution polymerization using a solvent, liquid-phase non-solvent polymerization substantially not using a solvent, vapor phase polymerization, solvent polymerization or the like, for which any of continuous polymerization or batchwise polymerization will go well. For the solvent polymerization, the solvent includes, for example, saturated aliphatic hydrocarbons and aromatic hydrocarbons such as hexane, heptane, pentane, cyclohexane, benzene, toluene, etc. One or more of these solvents may be used either singly or as combined. The amount of the catalyst to be used in the polymerization may be so determined that the component (c) is in an amount of generally from 0.5 to 100 micromols, but preferably from 2 to 25 micromols, per liter of the solvent, in view of the polymerization activity of the catalyst and of the reactor efficiency. The polymerization temperature may fall between -78 and 200°C, but preferably between -20 and 100°C. The olefin pressure in the reaction system is not specifically defined, but preferably falls between normal pressure and 50 kg/cm²G. The molecular weight of the polymer being produced could be controlled by any ordinary means, for example, by controlling the polymerization temperature and pressure or by introducing hydrogen into the polymerization system.

### [Examples]

The invention is described in more detail with reference to the following Examples, which, however, are not intended to restrict the scope of the invention. For ¹H-NMR and ²⁷Al-NMR, a sample is dissolved in heavy benzene (benzene-d₆, deuterium benzene, or C₆D₆), and analyzed by the use of JOEL's JNM-GX270 at 27°C. For ²⁷Al-NMR, employed is a single pulse method in which is used aluminium sulfate as the internal standard.

### [Example 1] Production of isobutyl-aluminium-µ-oxo compound:

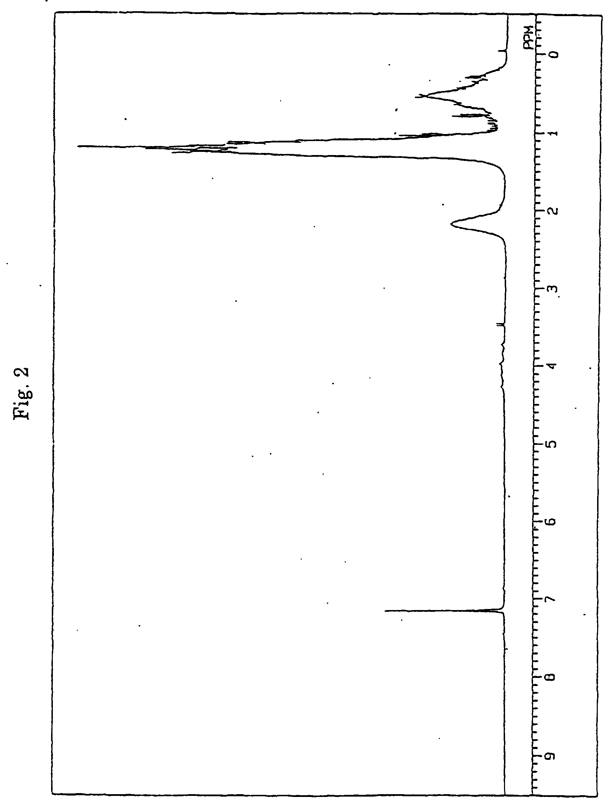

40 ml of tetraisobutyldialuminoxane/toluene solution (0.88 mols/liter, 35 mmols) was put into a 200-ml Schlenk tube that had been purged with nitrogen. While kept at room temperature, this was stirred with a magnetic stirrer, and gradually degassed to a vacuum degree of 1.0 x 10⁻³ mmHg. This was kept in that condition for 4 hours. Then, while still kept under the reduced pressure, this was heated up to 90°C in an oil bath, and processed for 24 hours in that condition. After having been thus processed, the product had a constant weight (5.8 g). As a result of the following measurement and analysis, the product was identified as the entitled compound. ²⁷Al-NMR of this compound gave a chart as in Fig. 1, in which is seen only a sharp singlet at 68 ppm. This supports that aluminium atoms in the compound are all in a penta-coordination state. ¹H-NMR of this compound gave a chart as in Fig. 2, which reads as follows:
0.3 to 0.7 ppm ((CH₃)₂CHCH₂, 2H, brs), 1.0 to 1.3 ppm ((CH₃)₂CHCH₂, 6H, brs), 1.9 to 2.3 ppm ((CH₃)₂CHCH₂, 1H, brs).

The data of the elementary analysis of the compound, 46.7 % for carbon and 9.7 % for hydrogen, well correspond to the theoretical data of the compound having a composition of [(i-C₄H₉)Al-(µ-O)]ₙ, 48.0 % for carbon and 9.1 % for hydrogen.

### [Example 2] Production of isobutyl-, methyl-aluminium-µ-oxo compound:

50 ml of tetraisobutyldialuminoxane/toluene solution (0.88 mols/liter, 44 mmols) and 44 ml of trimethylaluminium/toluene solution (1.0 mol/liter, 44 mmols) were put into a 200-ml Schlenk tube that had been purged with nitrogen. While kept at room temperature, this was stirred with a magnetic stirrer for 24 hours. Then, this was gradually degassed to a vacuum degree of 1.0 x 10⁻³ mmHg. This was kept in that condition for 4 hours. Then, while still kept under the reduced pressure, this was heated up to 90°C in an oil bath, and processed for 48 hours in that condition. After having been thus processed, the product had a constant weight (5.8 g). As a result of the following measurement and analysis, the product was identified as the entitled compound. In the chart of ²⁷Al-NMR of this compound, seen is only a sharp singlet at 68 ppm. This supports that aluminium atoms in the compound are all in a penta-coordination state. The chart of ¹H-NMR of this compound reads as follows:
-0.4 to 0.1 ppm (CH₃, 3H, brs), 0.3 to 0.7 ppm ((CH₃)₂CHCH₂, 4H, brs), 1.0 to 1.3 ppm ((CH₃)₂CHCH₂, 12H, brs), 1.9 to 2.3 ppm ((CH₃)₂CHCH₂, 2H, brs).
   These data indicate that the methyl group and the isobutyl group are in the compound in a molar ratio of 1:2.

The data of the elementary analysis of the compound, 44.2 % for carbon and 8.5 % for hydrogen, well correspond to the theoretical data of the compound having a composition of [((CH₃)Al-(µ-O))][((i-C₄H₉)Al-(µ-O))₂]ₙ, 41.9 % for carbon and 8.2 % for hydrogen.

### [Comparative Example 1] Comparison with methylaluminoxane:

A commercial product of methylaluminoxane was compared with the compounds of Examples 1 and 2, on the basis of the data of ¹H-NMR and ²⁷Al-NMR. In the chart of ¹H-NMR of the comparative methylaluminoxane, seen is a sharp peak for the methyl group (at -0.5 ppm) as derived from the remaining trimethylaluminium or dimethylaluminium group; while in that of the compound of Example 2, that peak is not seen. This verifies that the starting trimethylaluminium did not remain in the compound of Example 2 and that the compound of Example 2 does not have a dimethylaluminium group structure.

On the other hand, in the chart of ²⁷Al-NMR of the comparative methylaluminoxane, seen is a peak at 150 ppm (this is for the tetra-coordinated aluminium in the compound). From this, it is known that the comparative methylaluminoxane differs from the compounds of Examples 1 and 2 in the condition of the coordination number.

### [Example 3] Polymerization of propylene:

400 ml of toluene that had been well dehydrated and deoxidated, 0.5 mmols of triisobutylaluminium, and 1.0 mmol, in terms of the aluminium atom, of isobutyl-, methylaluminium-4-oxo compound of Example 2 were put into a 1.0-liter stainless steel autoclave which was equipped with a stirrer and a temperature controller and had been well purged with nitrogen gas. One micromol of ethylenebisindenylzirconiumdimethyl was added thereto, and heated. At 50°C, propylene was polymerized in the autoclave for 30 minutes under a propylene pressure of 5 kg/cm²G. After having been thus polymerized, the resulting slurry was taken out into 1 liter of methanol. This was filtered to separate the polymer, which was then dried. As a result, obtained was 54.7 g of polypropylene. The catalyst activity in the process was 1200 kg-polymer/g-Zr.

### [Example 4]

The same process as in Example 3 was repeated, except that 1.0 mmol of triisobutylaluminium was used. Herein obtained was 50.2 g of polypropylene. The catalyst activity in the process was 1100 kg-polymer/g-Zr.

### [Example 5]

Propylene was polymerized in the same manner as in Example 3, except that the toluene solution of isobutyl-, methyl-aluminium-µ-oxo compound (1 mol/liter) was kept at room temperature for 2 months and then used in an amount of 1.0 mmol in terms of the aluminium atom. As a result, obtained was 54.0 g of polypropylene. The catalyst activity in the process was 1180 kg-polymer/g-Zr. The toluene solution of isobutyl-, methyl-aluminium-µ-oxo compound used herein was homogeneous with no insolubles such as gel and the like therein. The data herein obtained support good stability of the compound.

### [Comparative Example 2]

The same process as in Example 3 was repeated, except that a commercial product (from Albemarle) of methylaluminoxane was used in an amount of 1.0 mmol in terms of the aluminium atom, in place of the isobutyl-, methyl-aluminium-µ-oxo compound. As a result, obtained was 36.5 g of polypropylene. The catalyst activity in the process was 800 kg-polymer/g-Zr.

### [Comparative Example 3]

The same process as in Example 4 was repeated, except that a commercial product (from Albemarle) of methylaluminoxane was used in an amount of 1.0 mmol in terms of the aluminium atom, in place of the isobutyl-, methyl-aluminium-µ-oxo compound. As a result, obtained was 31.9 g of polypropylene. The catalyst activity in the process was 700 kg-polymer/g-Zr.

### [Example 6] Production of syndiotactic polystyrene:

### (1) Preparation of pre-mixed catalyst:

A 50-ml Schlenk tube was well purged with nitrogen. 11.8 ml of toluene, 0.375 ml of triisobutylaluminium/toluene solution (2 mols/liter, 0.75 mmols), 2.25 ml of isobutyl-, methyl-aluminium-µ-oxo compound (product of Example 2)/toluene solution (1 mol/liter, 2.25 mmols), and 0.6 ml of pentamethylcyclopentadienyltitanium trimethoxide/toluene solution (50 mmol/liter, 0.03 mmols) were put into the tube, with stirring in a nitrogen stream. These were stirred at room temperature for 3 hours to prepare a pre-mixed catalyst.

### (2) Polymerization of styrene:

10 ml of styrene and 0.01 ml of triisobutylaluminium/toluene solution (0.5 mols/liter, 0.005 mmols) were put into a 30-ml ampoule, in a nitrogen box. This ampoule was dipped in an oil bath at 70°C. After 10 minutes, 0.125 ml of the pre-mixed catalyst having been prepared in (1) was put into the ampoule. The monomer was polymerized under heat at 70°C for 1 hour in that condition, and the ampoule was taken out of the oil bath. The resulting product was processed with methanol. The polymer was separated from the product, then dipped in methanol overnight, and thereafter dried in vacuum at 200°C for 2 hours. The yield of the polymer was 0.60 g. The polymerization activity of the catalyst in the process was 45 kg-polymer/g-Ti. The limiting viscosity [η] of the polymer as measured in trichlorobenzene at 135°C was 2.70 dl/g; and the melting point, Tm, of the polymer as obtained through differential scanning calorimetry (DSC) was 268°C. From its melting point, Tm, the polymer obtained herein was identified as syndiotactic polystyrene.

### INDUSTRIAL APPLICABILITY:

The catalyst for olefinic polymer production of the invention exhibits high activity, and its activity per the aluminium atom therein is especially high. Using the catalyst realizes high-yield, stable production of intended olefinic (co)polymers. According to the production method of the invention, obtained are high-quality olefinic homopolymers, olefinic copolymers and styrenic polymers with high stereospecificity. The residual metal content of those (co)polymers is reduced, and the method is economical and efficient.

## Claims

1. An organic aluminium oxide compound with aluminium being in a penta-coordination state, wherein at least one atom of the ligands each bonding to aluminium via a coordination bond, which atom bonds to aluminium via a coordination bond, is an oxygen atom.

2. The organic aluminium oxide compound as claimed in claim 1, of which the aluminium nuclear magnetic resonance spectrum (²⁷Al-NMR) gives a pattern of such that the proportion of the integrated value of the peaks appearing therein to fall within the range between 20 and 80 ppm is at least 80 % by area relative to the integrated value of all aluminium peaks therein.

3. The organic aluminium oxide compound as claimed in claim 1 or 2, which is represented by a compositional formula of RAlO (where R indicates a hydrocarbon group).

4. A method for producing an organic aluminium oxide compound of any one of claims 1 to 3, which comprises processing an organic aluminium compound or a mixture of an organic aluminium oxide compound and an organic aluminium compound under reduced pressure and under heat.

5. The method for producing an organic aluminium oxide compound as claimed in claim 4, wherein the ratio of the organic aluminium oxide compound to the organic aluminium compound falls between 1:0 and 1:2 in terms of the molar ratio for the aluminium atom in the two.

6. A catalyst for producing olefinic polymers, which comprises (a) an organic aluminium oxide compound of any one of claims 1 to 3, and (c) a compound of a transition metal of Group IV, V, VI or VIII of the Periodic Table.

7. A catalyst for producing olefinic polymers, which comprises (a) an organic aluminium oxide compound of any one of claims 1 to 3, (b) an alkylating agent, and (c) a compound of a transition metal of Group IV, V, VI or VIII of the Periodic Table.

8. The catalyst for producing olefinic polymers as claimed in claim 6 or 7, wherein the component (c) is a transition metal compound of any of the following general formulae (I) to (IV):
Q¹ₐ(C₅H_{5-a-b}R¹_{b})(C₅H_{5-a-c}R²_{c})M¹X¹Y¹ (I)
Q²ₐ(C₅H_{5₋a₋d}R³_{d})Z¹M¹X¹Y¹ (II)
M¹X¹₄ (III)
L¹L²M²X¹Y¹ (IV)
where Q¹ represents a bonding group that crosslinks the two conjugated, five-membered cyclic ligands (C₅H_{5₋a₋b}R^{¹}_{b}) and (C₅H_{5₋a₋c}R²_{c}); Q² represents a bonding group that crosslinks the conjugated, five-membered cyclic ligand (C₅H_{5₋a₋d}R³_{d}) and the group Z¹; R¹, R² and R³ each independently represent a hydrocarbon group, a halogen atom, an alkoxy group, a silicon-containing hydrocarbon group, a phosphorus-containing hydrocarbon group, a nitrogen-containing hydrocarbon groups, or a boron-containing hydrocarbon group, and a plurality of these, if any, may be the same or different; a represents 0, 1 or 2; b, c and d each represent an integer of from 0 to 5 when a = 0, or an integer of from 0 to 4 when a = 1, or an integer of from 0 to 3 when a = 2; M¹ represents a transition metal of Group IV, V or VI of the Periodic Table; M² represents a transition metal of Group VIII of the Periodic Table; L¹ and L² each represent a coordinating ligand; X¹, Y¹ and Z¹ each represent a covalent-bonding ligand; L¹, L², X¹ and Y' may bond to each other to form a cyclic structure.

9. A method for producing olefinic polymers, which comprises homopolymerizing olefins or copolymerizing olefins with other olefins and/or other polymerizing unsaturated compounds in the presence of a catalyst for olefinic polymer production of any one of claims 6 to 8.
